# EUROPÄISCHE PATENTANMELDUNG

(11) **EP 2 103 328 A1**
(43) Veröffentlichungstag der Anmeldung: **23.09.2009**
(21) Anmeldenummer: 09003882.9
(22) Anmeldetag: 18.03.2009
(51) Int. Cl.: A62C 39/00

(54) **Verfahren und Vorrichtung zum Simulieren einer bestimmten Brandsituation insbesondere mit schlagartiger Flammenausbreitung**

(30) Priorität: 20.03.2008 DE 102008015244
(71) Anmelder: Spiegel, Jakob, 67659 Kaiserslautern (DE)
(72) Erfinder: Spiegel, Jakob, 67659 Kaiserslautern (DE)
(74) Vertreter: Schmid, Nils T.F.

(57) **Zusammenfassung**

Bei einer Vorrichtung zum Simulieren einer bestimmten Brandsituation insbesondere mit schlagartiger Flammenausbreitung, insbesondere eines Flash-Over-Brands, in einem verschließbaren oder geschlossenen Brennraum, umfassend eine in dem Brennraum angeordnete mit Brenngas betriebene Feuerstelle mit wenigstens einer Brennerbasisdüse zum Erwärmen des Brennraums durch gezündetes Brenngas, ist vorgesehen, daß die wenigstens eine Brennerbasisdüse einer Flammenbarriere derart zu geordnet ist, dass eine Ausbreitung einer Flamme ausgehend von der Zündung an der Brennerbasisdüse durch die Flammenbarriere beschränkt ist.

## Beschreibung

Die Erfindung betrifft eine Vorrichtung und ein Verfahren zum Simulieren einer bestimmten Brandsituation insbesondere mit einer schlagartigen Flammenausbreitung, was im fachspezifischen Sprachgebrauch Flash-Over-Brand genannt wird.

Üblicherweise werden Brandsituationen in speziell dafür eingerichteten wohncontainerartigen Brennräumen durchgeführt, die verschließbar sind, um praxisnah eine Brandsituation in einem Gebäude zu simulieren. In diesem Simulations-Brennraum können beispielsweise Feuerwehrübungen durchgeführt werden, indem Feuerwehrleute in voller Feuerschutzmontur in den Brennraum gehen, um zu erfahren, wie sich eine bestimmte Brandsituation, wie der Flash-Over-Brand, in realitätsähnlichen Bedingungen verhält.

Ein Flash-Over-Brand wird gemäß internationaler Normdefinition als schneller Übergang des Feuers auf sämtliche Oberflächen brennbarer Materialien in einem Raum verstanden. Im Brandschutzingenieurwesen wird die Flash-Over-Brand-Situation als Grenze zwischen einer so genannten Entstehungsphase oder Pre-Flash-Over-Phase und dem Vollbrand (Post-Flash-Over-Phase) eines Zimmerbrands beschrieben. Erfahrungsgemäß tritt die Flash-Over-Brand-Situation bei Raumtemperaturen zwischen 500°C und 600°C auf, wobei eine Wärmestrahldichte der Flamme und des Rauches von 15 bis 20 KW/m² messbar ist.

Für Feuerwehrleute ist es ein sehr wichtiger Erfahrungsaspekt, zu wissen, ob sich eine Brand-situation in einem Zimmerbrand stabil ist oder ein Flash-Over-Brand kurz bevor steht. Insofern ist es ausgesprochen wichtig, den Feuerwehrleuten Erfahrungen zu vermitteln, die die Entwicklung eines Brandsherds hin zum Vollbrand zeigt, damit Feuerwehrleute im Brandfall erkennen, wann ein Raum zu verlassen ist, weil die Brandsituation zu kritisch ist.

Während der Entstehungsphase brennen erfahrungsgemäß zunächst nur einzelne Einrichtungsgegenstände in dem Brandraum, wobei Verbrennungsgase und Pyrolysegase entstehen. Sollte die entstanden Verbrennungsgase nicht durch Rauchöffnungen abgezogen werden, so kommt es zu einem Wärmestau an der Decke. Die damit stark erwärmte Rauchsschicht strahlt nun auf alle Einrichtungsgegenstände immer stärker aus, wodurch die Temperaturen im gesamten Brandraum steigen und es zum Zünden aller noch nicht brennenden Oberflächen von brennbaren Gegenständen kommen kann, wodurch die gefährliche schlagartige Flammenausbreitung, nämlich der Flash-Over-Brand, geschieht.

Es ist bekannt, ein Verfahren und eine Vorrichtung zum Simulieren von schlagartigen Flammenausbreitungen bereitzustellen, wie beispielsweise in DE 199 59 640 Al angegeben ist. Die bekannte Simulationsvorrichtung hat eine Feuerstelle, welche über ein Brenngas-Luftgemisch betrieben wird. Die Feuerstelle stellt zum Erwärmen eine Flammenausbreitung in dem Brennraum bereit. Es zeigte sich bei der bekannten Simulationsvorrichtung der Nachteil, dass während der Entstehungsphase häufig erfahrungsgemäße keine Flammenbildung zu erkennen ist, allerdings eine sehr starke Rauchbildung. Insofern ist bei der bekannten Simulationsvorrichtung eine realitätsnahe Entstehungsphase oder Pre-Flash-Over-Phase kaum realitätsgetreu darstellbar.

Es ist Aufgabe der Erfindung, die Nachteile des Stands der Technik zu überwinden, insbesondere ein Verfahren und eine Vorrichtung zum Simulieren einer vorbestimmten Brandsituation mit schlagartiger Flammenausbreitung bereitzustellen, mit dem ein realitätsnaher Brandverlauf in einem verschließbaren Brennraum möglich ist.

Diese Aufgabe wird durch die Merkmale von Anspruch 1 und 22 gelöst.

Danach ist die erfindungsgemäße Simulationsvorrichtung mit einer in dem Brennraum angeordneten mit Brenngas betriebenen Feuerstelle mit wenigstens einer Brennerbasisdüse zum Erwärmen des Brennraums durch gezündetes Brenngas an der Brennerbasisdüse ausgestattet. Erfindungsgemäß ist die Brennerbasisdüse einer Flammenbarriere derart zugeordnet, dass eine Ausbreitung einer Flamme ausgehend von der Zündung des Brenngases an der Brennerbasisdüse durch die Flammenbarriere beschränkt ist. Mit der erfindungsgemäßen Simulationsvorrichtung ist es möglich, eine bestimmte Brandsituation, insbesondere einen typischen Brandablauf, durch die Simulationsvorrichtung eindeutig vorhab festzulegen. Insbesondere der Übergang zu einem Flash-Over-Brand kann zu jeder Zeit individuell von einer die Simulationsvorrichtung kontrollierenden Person ausgelöst werden. Die erfindungsgemäße Simulationsvorrichtung ist also dazu ausgerichtet, nicht einfach nur einen Brand zu initiieren, dessen weiterer Verlauf unkontrolliert bleibt, sondern zu jedem Zeitpunkt eine gewünschte, bestimmte Brandsituation, wie einen Übergang zum Flash-Over-Brand, hervorzurufen.

Mit der erfindungsgemäßen Maßnahme der Zuordnung einer Flammenbarriere zur Brennerbasisdüse wird erreicht, dass ein ungewolltes Ausbreiten von Flammen während der Simulation der Entstehungsphase, nämlich eines Pre-Flash-Over-Brandphase, nicht einhergeht. Auf diese Weise wird eine realitätsnahe Brandsituation simuliert, bei der eine starke Temperaturerhöhung eines Brennraums mit Zunahme von Rauchgas bewirkt wird, ohne dass sich Flammen in dem Brennraum ausbreiten können. Die Flammenbarriere verhindert also, dass sich Flammen ausgehend von der Brennerbasedüse ungehindert in den geschlossenen Brennraum ausbreiten können. Vielmehr soll die Flammenbarriere eine Flammenentwicklung unterdrücken und durch an der Brennerbasisdüse gezündetes Brenngas erwärmt werden und über Wärmekonvektion den Brennraum aufheizen. Dies entspricht einer Brandsituation, in der sich in dem geschlossenen Raum heißes Gas und Rauch entwickelt, ohne dass Flammen schlagen können. Erst zu einem vorbestimmten Zeitpunkt, den eine die Simulationsvorrichtung kontrollierende Person bestimmt, kann durch Aktivierung weiterer Düsen, die über die Flammenbarriere hinaus reichen, ungezündetes Brenngas in den Brennerraum einströmen und dort gezündet werden, um insbesondere einen Flash-Over-Brand und einen Übergang dazu zu simulieren.

Bei einer Weiterbildung der Erfindung ist die Flammenbarriere durch eine gasdurchlässige Aufnahme für schwer entflammbares oder pyrolisierbares Material, wie Lavasteine, Kieselsteine, gebildet. Es sei klar, dass das schwer entflammbare Material in der Aufnahme eine stabile Glutphase bilden soll, um die notwendige Wärmestrahlungsleistung in dem Brennraum bereitzustellen. Das schwer entflammbare Material soll auch bei hohen Temperaturen nicht zumindest in einem großen Umfang und in einen gasförmigen Aggregatzustand übergehen.

Die Flammenbarriere kann auch nur ausschließlich durch die Aufnahme beispielsweise in Form eines Rostes, insbesondere Gitterrostes, gebildet sein. Vorzugsweise mündet die wenigstens eine Brennerbasisdüse an der Aufnahme insbesondere in Gravitationsrichtung gesehen unterhalb oder auf gravitationsgemäßer Höhe der Aufnahme, wobei das schwer entflammbare Material über der Brennerbasisdüse liegt. Beim Zünden der wenigstens einen Brennerbasisdüse entsteht eine Flamme, die aufgrund des Rostes und/oder des schwer entflammbaren Materials an der Ausbreitung in dem Brennraum gehindert wird, wobei der Rost und/oder das schwer entflammbare Material durch die entzündete Flamme an der Brennerbasisdüse aufgeheizt und in einen Glühzustand versetzt wird.

Um die gewünschte realitätsgtreue Pre-Flash-Over-Phase zu simulieren, kann vorzugsweise eine Rauchgaszuführleitung vorgesehen sein, die sich an der Feuerstelle und der Flammenbarriere seitlich vorbei in den Brennraum erstreckt. Es sei klar, dass die Rauchgaszuführleitung oberhalb der Aufnahme und/oder des schwer entflammbaren Materials endet, um einen freien Zugang zum Brennraum zu gewährleisten. Die Rauchgaszuführleitung ist vorzugsweise an einen Rauchgasgenerator angeschlossen, der auch außerhalb des Brennraums angeordnet sein kann. In der Rauchgaszuführleitung können wenigstens ein Steuer- und/oder Regelventil, beispielsweise ein Handstellventil und ein Blockventil, integriert sein, um die Rauchgasmenge in dem Brennraum entsprechend bestimmter Brandsituationen einstellen zu können. Die Ventile können insbesondere mit einer so genannten SPS-Steuerung verbunden sein.

Bei einer bevorzugten Weiterbildung der Erfindung ist die Feuerstelle außerdem mit wenigstens einer Flammenausbreitdüse ausgestattet, die dem Brennraum näher als die wenigstens eine Brennerbasisdüse liegt, also insbesondere an der Flammenbarriere vorbei angeordnet ist, so dass bei deren Aktivierung, also bei der Zündung der Flammenausbreitdüse, eine schlagartige Ausbreitung in einen Brennraum simuliert werden kann. Vorzugsweise erstreckt sich die wenigstens eine Flammenausbreitdüse über die Flammenbarriere hinaus in den Brennraum. Es sei klar, dass die Flammenausbreitdüse auch an der dem Brennraum zugewandten Oberseite der Flammenbarriere enden kann. Es ist vorzugsweise sicherzustellen, dass die Flammenausbreitdüse derart zur Flammenbarriere und dem Brennraum angeordnet ist, dass eine ungehinderte Flammenausbreitung in den Brennraum gewährleistet ist.

Bei einer Weiterbildung der Erfindung sind mehrere Flammenausbreitdüsen in einem gleichen Abstand zueinander an der Feuerstelle oberhalb der Flammenbarriere angeordnet. Dabei können die mehreren Flammenausbreitdüsen in Form eines Flammenausbreitdüsenrohres mit mehreren Ausgängen gebildet sein, das sich horizontal erstreckt.

Bei einer bevorzugten Ausführung der Erfindung ist die wenigstens eine Flammenausbreitdüse als ein in dem Brennraum gerichtete Flachstrahldrüse ausgebildet. Die Flachstrahldüse kann eine Flachstrahlrichtung definieren, die bezüglich der Gravitationsrichtung in einem Winkel von insbesondere etwa 45° geneigt ist.

Vorzugsweise sind zwei Flachstrahldüsen paarweise angeordnet, wobei die Strahlrichtung der paarweise angeordneten Flachstrahldüsen voneinander weg gerichtet sind. Mit der besonderen Anordnung und Ausführung der Flammenausbreitdüse als Flachstrahldüse mit einer 45° Strahlrichtung kann eine besonders gleichmäßige, realitätsnahe Flammenausbreitung in dem Brennraum gewährleistet werden.

Es sei klar, dass die Brennerbasisdüse an eine Versorgungsleitung angeschlossen ist, die mit einer Brenngasquelle verbunden ist.

Bei einer bevorzugten Ausführung der Erfindung ist die wenigstens eine Flammenausbreitdüse über eine gegenüber der Versorgungsleitung der Brennerbasisdüse separate eigene Versorgungsleitung angeschlossen, die mit einer Brenngasquelle verbunden ist.

Bei einer Weiterbildung der Erfindung hat die Feuerstelle wenigstens einen Zünder, der über eine separate eigene Zündgasleitung an eine Zündgasquelle angeschlossen ist.

Vorzugsweise ist der wenigstens eine Zünder im wesentlichen auf einer gravitationsgemäßen Höhe der Flammenbarriere, unterhalb der Flammenbarriere und/oder oberhalb der Flammenbarriere angeordnet. Dabei kann der Zünder an einem Außenrandbereich der Feuerstelle liegen. Beispielsweise kann der Flammenausbreitdüse und der Brennerbasisdüse jeweils ein Zünder zugeordnet sein, der für das Zünden des jeweiligen Brenngases verantwortlich ist. Auf diese Weise ist eine kontrollierte Erwärmung und/oder Flammenausbreitung in dem Brennraum gewährleistet.

Bei einer Weiterbildung der Erfindung ist der wenigstens eine Zünder seitlich zwischen einer Rauchgaszuleitung und der Flammenbarriere angeordnet.

Vorzugsweise sind die Zündgasquelle, die Brenngasquelle für die wenigstens eine Brennerbasisdüse und die Brenngasquelle für die wenigstens eine Ausbreitdüse in einer gemeinsamen Gasquelle realisiert.

Jede der Versorgungsleitungen, die Brenngasleitung und/oder die Zündgasversorgungsleitung können mit wenigstens einem Steuer- und/oder Regelventil, vorzugsweise einem Handsperrventil, Blockventil, etc., versehen sein.

Es sei klar, dass eine Steuer- und/oder Regelungseinrichtung, wie eine SPS-Steuerung, vorgesehen sein, die mit wenigstens einen Ventil zur Regelung der Brandsituation in dem Brennraum verbunden ist.

Beim erfindungsgemäßen Verfahren zum Simulieren einer bestimmten Brandsituation insbesondere mit schlagartiger Flammenausbreitung in einem verschließbaren oder geschlossenen Brennraum wird während einer Entstehungsphase, wie dem Pre-Flash-Over-Brand, der Brennraum durch die Feuerstelle auf eine Raumtemperatur von etwa 250°C bis 550C, vorzugsweise 400° bis 500°, vorgewärmt und dem Brennraum Rauchgas zugeführt. Nach Erreichen einer vorbestimmten Schwellentemperatur, insbesondere der so genannten Flash-Over-Temperatur, wird eine Ausbreitung einer Flamme zumindest in einem Teil des Brennraums, vorzugsweise in dem gesamten Brennraum, veranlasst, um die bestimmte Brandsituation mit der schlagartigen Flammenausbreitung zu simulieren. Erfindungsgemäß wird während der Entstehungsphase die Flammenausbreitung durch eine der Feuerstelle zugeordneten Flammenbarriere unterbunden.

Zum Erwärmen des Brennraums wird die Flammenbarriere durch die Feuerstelle zum Glühen gebracht. Vorzugsweise dient die Flammenbarriere als Wärmespeicher, der während der Entstehungsphase der vorbestimmten Brandsituation einen Strahlungsstärke von etwa 5 bis 20 KW/m² abgibt.

Vorzugsweise dauert die Entstehungsphase 2 bis 15 Minuten, was durch eine die die erfindungsgemäße Simulierungsvorrichtung bedienende Person eingestellt werden kann.

Vorzugsweise ist die Steuerung- und/oder Regelung derart eingestellt, dass die schlagartige Flammenausbreitung wenigstens 1 Minute, vorzugsweise 5 oder 15, aufrecht gehalten wird.

Es sei klar, dass die erfindungsgemäße Schwellentemperatur anhand von Erfahrungswerten eingestellt werden kann.

Eine bestimmte Brandsituation kann dadurch erzeugt werden, dass eine Flammenausbreitung in den Brennraum durch wenigstens eine Flammenausbreitdüse realisiert wird, die sich in Gravitationsrichtung gesehen oberhalb der Flammenbarriere erstreckt und das dort austretende Brenngas gezündet wird, um ein ungehindertes Ausbreiten von Flammen, ausgehend von den Flammenausbreitdüsen in den Brennraum zu realisieren und damit einen Flash-Over-Brand zu simulieren.

Das erfindungsgemäße Verfahren soll entsprechend der Funktionsweise der oben beschriebenen Vorrichtung ausgeführt sein.

Mit dem erfindungsgemäßen Verfahren und Vorrichtung können realitätsnahe Brandsituation simuliert werden, wobei die Kombination mit der Flammenbarriere und insbesondere mit dem Einsatz von Flammenausbreitdüsen eine Flammenfarbe (gelb-orange) erzeugt werden kann, die dem Flash-Over-Brand sehr nahe kommt. Insofern können Feuerwehrleute, die Erfahrungen mit der erfindungsgemäßen Simulationsvorrichtung machen, geholfen werden, die Brand-situation im Einsatzfall genauer einschätzen zu können, was dem Schutz der Gesundheit und des Lebens der Feuerwehrleute dient.

Weitere Vorteile, Eigenschaften und Merkmale der Erfindung werden durch die folgende Beschreibung einer bevorzugten Ausführung der Erfindung anhand der beiliegenden Zeichnungen deutlich, in denen zeigen:
- Figur 1: eine schematische Querschnittsansicht einer erfindungsgemäßen Vorrichtung zum Simulieren einer Flash-Over-Brand-Situation in einem nicht näher dargestellten Brennraum;
- Figur 2: eine Draufsicht auf die Vorrichtung gemäß Figur 1;
- Figur 3: die schematische Querschnittsansicht gemäß Figur 1, wobei die Vorrichtung in der Pre-Flash-Over-Brandphase ist;
- Figur 4: eine schematische Querschnittsansicht gemäß Figuren 1 bis 3, wobei die Flash-Over-Brandsituation dargestellt ist.

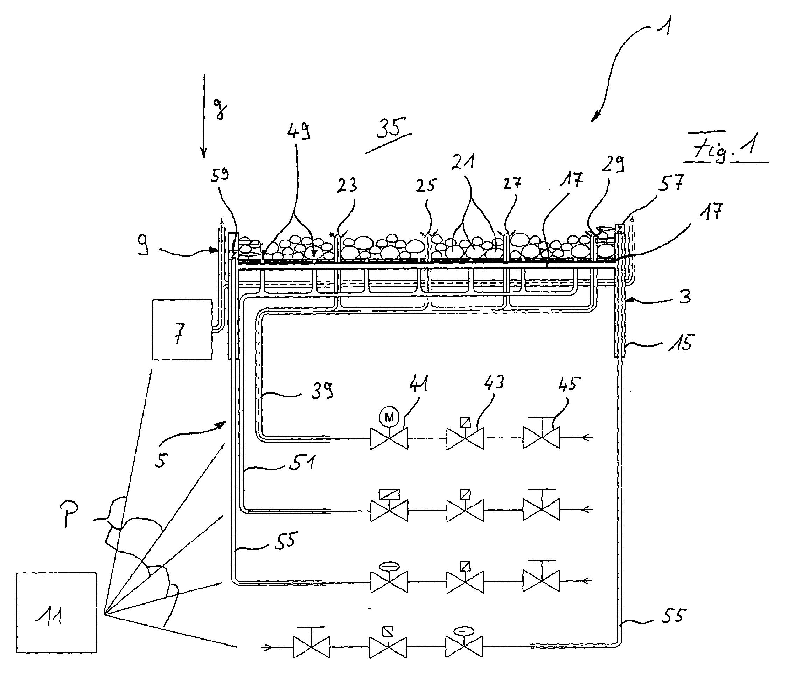

In den Figuren 1 bis 4 ist die erfindungsgemäße Vorrichtung zum Simulieren der Flash-Over-Brandsituation in einem geschlossenen Raum im allgemeinen mit der Bezugsziffer 1 versehen.

Als Hauptbestandteile umfasst die Simulationsvorrichtung 1 eine Feuerstelle 3, ein Brenngaszuführleitungssystem 5, einen Rauchgenerator 7 mit dem entsprechenden Rauchgaszuführleitungssystem 9 und einer Steuerungs- und/oder Regelungseinrichtung 11 zum Einstellen der Brenngaszuführung und der Rauschgaszuführung.

Die Feuerstelle, die auch als Brennattrappe bezeichnet werden kann, ist durch ein Traggestell 15 und einem Gitterrost 17 gebildet. Der Gitterrost 17 ist dazu ausgelegt, ein schwer entflammbares oder pyrolisierbares Material, wie Lavasteine 21 oder Kiesel, aufzunehmen.

Zwischen den auf dem Gitterrost 17 angehäuften Lavasteinen 21 erstrecken sich vier geradlinige Flachstrahldüsenrohre 23, 25, 27, 29 in einer Querrichtung eines als Rechteck geformten Gitterrosts. Jedes Flachstrahldüsenrohr 23 bis 29 umfaßt mehrere Flachstrahldüsen 31, die ein Brenngas-Luftgemisch in einem etwa 45° Winkel zur Gravitationsrichtung g in den Brennraum 35 einblasen.

Wie in Figur 1 ersichtlich ist, erstrecken sich die Flachstrahldüsenrohre 23 bis 29 vertikal etwa über die Lavasteinschüttung hinaus geringfügig in den Brennraum 35, wobei eine ungehindertes Ausstrahlen eines Brenngas-Luftgemischs in dem 45° Winkel in dem Brennraum 35 gewährleistet ist.

Die Flachstrahldüsenrohre 23 bis 29 sind über eine Flash-Over-Gasleitung 39 mit einer nicht dargestellten Gas-Luft-Quelle verbunden. In der Flash-Over-Gasleitung 39 ist ein Motorregelventil 41, ein Magnetventil 43 und ein Regelventil 45 zum Einstellen der Brenngas-Luftgemischmenge für den Austritt an den Flachstrahldüsenrohren 23 bis 29 integriert. Die Ventile 41 bis 45 können mit der Steuerungs- und/oder Regelungseinrichtung 11 verbunden sein, was durch einen der Pfeile P angedeutet sein soll.

Im wesentlichen auf einer gravitationsgemäßen Höhe des horizontalen Gitterrohrs 17 münden Brennerbasisdüsen 49, die in einem gleichen horizontalen Abstand voneinander liegen. Der Düsenaustritt der Brennerbasisdüsen 49 liegt unterhalb der geschütteten Lavasteine 21. Jede Brennerbasisdüse 49 ist über eine Heizgasleitung 51 mit einer Brenngas-Luft-Quelle (nicht dargestellt) verbunden. In der Heizgasleitung 51 ist ein Magnetventil, ein Blockierventil und ein Handabsperrventil zum Einstellen des Brenngas-Luftgemisches integriert, das an den Brennerbasisdüsen 49 austreten soll.

Um das Brenngas-Luftgemisch für das an der Brennerbasisdüse 49 austretende Brenngas und/oder für das an den Flachstrahldüsen 31 austretende Brenngas zu entzünden, ist ein separates Zündsystem mit einer eigenen Zündgasleitung 55 vorgesehen, die sich zu Zündern 57, 59 erstreckt und mit einer Zündgasquelle (nicht näher dargestellt) verbunden ist. In der Zündgasleitung 55 ist ein Regelventil, ein Blockierventil und ein Handabsperrventil zur Einstellung der Zündgas-Luft-Menge integriert. Die Ventile können mit der Steuerungs- und/oder Regelungseinrichtung 11 verbunden sein, wie durch einen der Pfeile P angedeutet ist.

Die Zünder 57, 59 sind an dem Gestell 15 der Feuerstelle 3 angeordnet, wobei der Zünder 59 in der Nähe des Ausgangs der Brennerbasisdüse 49 liegt, während der Zünder 59 im wesentlichen oberhalb der Lavasteingruppierung benachbart den Flachstrahldüsen 31 zugeordnet ist.

Der Rauchgasgenerator 7 führt Rauchgas in den Brennraum 35 über die Rauchgasleitung 9 ein, die sich seitlich vertikal neben der Zündgaszuführleitung 55 erstreckt. Die Öffnung der Rauchgasleitung 9 liegt etwa oberhalb der Feuerstelle 3.

Um einen Flash-Over-Brand, bei dem ein schneller Übergang des Feuers auf alle Oberflächen brennbarer Materialien mit einer schlagartigen Flammenausbreitung stattfindet, zu simulieren, ist zuerst eine so genannte Entstehungsphase, die Pre-Flash-Over-Brandphase, bei der sich die Zimmertemperatur eines Raums auf ca. 500° bis 600° erhöht. Während dieser Pre-Flash-Over-Phase entsteht eine große Menge Rauchgas, ohne dass eine starke Flammenausbreitung visuell erfassbar ist.

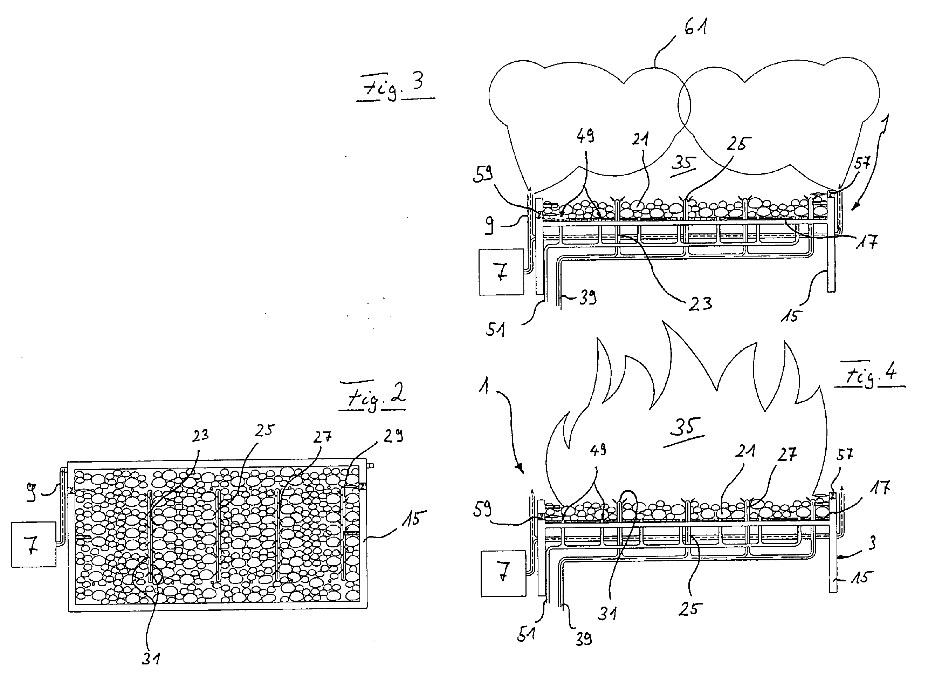

Gemäß dem erfindungsgemäßen Verfahren wird anfänglich der Rauchgasgenerator 7 aktiviert, um Rauchgas über Rauchgasleitung 9 in den Brenner 35 strömen zu lassen, was in Figur 3 durch die Bezugsziffer 61 verdeutlicht sein soll.

Um die Raumtemperatur des Brennraums 35 zu erhöhen, wird Heizgas über die Heizgasleitung 51 den Brennbasendüsen 49 zugeführt und durch den Zünder 59 gezündet.

Die Gruppierung der Lavasteine 21 sowie der Rost 17 dienen als eine Flammenbarriere für das an der Brennerbasisdüse 49 gezündete Heizgas, um eine Flammenausbreitung in den Brennraum 35 von den Brennerbasisdüsen 49 zu verhindern. Damit können die tatsächlichen Gegebenheiten bei einer Pre-Flash-Over-Phase simuliert werden.

Die Lavasteine 21 gehen bei Erhitzen in eine Glühphase über, wobei die abgebbare Wärmeabstrahldichte im Bereich von 5 bis 20KW/m² liegt, um die gewünschte Steigung der Raumtemperatur während der Pre-Flash-Over-Phase zu erreichen.

Nach einer vorbestimmbaren Zeit, wenn beispielsweise eine vorbestimmbare Raumtemperatur erreicht ist, was durch Erfahrungswerte eingestellt werden kann, wird der Flash-Over-Brand dadurch simuliert, daß die Flachstrahldüsen 31 mit Brenngas beschickt werden, das durch den Zünder 57 gezündet wird. Da sich die Flachstrahldüsen 31 über die Flammenbarriere der Lavasteine 21 hinaus erstrecken, kann eine schlagartige Flammenausbreitung ungehindert in dem Brennraum 35 hervorgerufen werden, was den Flash-Over-Brand praxisnah simuliert.

Die Vorrichtung wird selbstverständlich mit Rauchabzugseinrichtungen versehen sein, die in den Figuren nicht näher dargestellt sind.

Es sei klar, dass auch während der Pre-Flash-Over-Phase Luft über die Flachstrahldüsen 31 in den Brennraum 35 geblasen wird, um eine bessere Verteilung des Rauchgases 61 zu bewirken, was durch die Pfeile in Figur 3 angedeutet ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Simulationsvorrichtung
- 3: Feuerstelle
- 5: Brenngaszuführleitungssystem
- 7: Rauchgenerator
- 9: Rauchgaszuführleitung
- 11: Steuerungs- und/oder Regelungseinrichtung
- 15: Traggestell
- 17: Gitterrost
- 21: Lavasteine
- 23, 25, 27, 29: Flachstrahldüsenrohre
- 31: Flachstrahldüsen
- 35: Brennraum
- 39: Flash-Over-Gasleitung
- 41: Motorregelvenil
- 43: Magnetventil
- 45: Regelventil
- 49: Brennbasisdüsen
- 51: Heizgasleitung
- 55: Zündgasleitung
- 57,59: Zünder
- 61: Rauchgas
- g: Gravitationsrichtung
- P: Pfeile

## Patentansprüche

1. Vorrichtung zum Simulieren einer bestimmten Brandsituation insbesondere mit schlagartiger Flammenausbreitung, insbesondere eines Flash-Over-Brands, in einem verschließbaren oder geschlossenen Brennraum (35), umfassend eine in dem Brennraum (35) angeordnete mit Brenngas betriebene Feuerstelle (3) mit wenigstens einer Brennerbasisdüse (49) zum Erwärmen des Brennraums (35) durch gezündetes Brenngas, **dadurch gekennzeichnet, daß** die wenigstens eine Brennerbasisdüse (49) einer Flammenbarriere derart zu geordnet ist, dass eine Ausbreitung einer Flamme ausgehend von der Zündung an der Brennerbasisdüse (49) durch die Flammenbarriere beschränkt ist.

2. Vorrichtung nach Anspruch 1, **dadurch gekennzeichnet, daß** die Zuordnung der Brennerbasisdüse (49) zur Flammenbarriere derart realisiert ist, dass die wenigstens eine Brennerbasisdüse (49) in Gravitationsrichtung gesehen unterhalb der Flammenbarriere angeordnet ist, sodass eine Ausbreitung einer Flamme ausgehend von der Zündung an der Brennerbasisdüse durch die Flammenbarriere behindert ist.

3. Vorrichtung nach Anspruch 1 oder 2, **dadurch gekennzeichnet, daß** die Flammenbarriere durch eine gasdurchlässige Aufnahme für schwer entflammbares oder pyrolisierbares Material, wie Lavasteine (21), gebildet ist.

4. Vorrichtung nach einem der vorstehenden Ansprüche, **dadurch gekennzeichnet, daß** die Flammenbarriere, vorzugsweise die Aufnahme, ein Rost, insbesondere Gitterrost (17), ist, an die wenigstens eine Brennerbasisdüse (49) mündet und insbesondere die das schwer entflammbare Material hält.

5. Vorrichtung nach einem der vorstehenden Ansprüche, **dadurch gekennzeichnet, daß** sich an der Feuerstelle (3) und der Flammenbarriere vorbei eine Rauchgaszuführleitung in den Brennraum (35) erstreckt, wobei insbesondere sich die Rauchgaszuführleitung (9) seitlich vorbei der Feuerstelle (3) erstreckt und/oder die Rauchgaszuführleitung (9) an einen Rauchgasgenerator (7) angeschlossen ist, wobei insbesondere die Rauchgaszuführleitung (9) mit wenigstens einem Steuer- und/oder Regelventil, vorzugsweise einem Handsperrventil, einem Blockventil, versehen ist.

6. Vorrichtung nach einem der vorstehenden Ansprüche, **dadurch gekennzeichnet, daß** die Feuerstelle (3) außerdem mit wenigstens einer Flammenausbreitdüse ausgestattet ist, die dem Brennraum (35) näher als die wenigstens eine Brennerbasisdüse (49) liegt, wobei insbesondere sich die wenigstens eine Flammenausbreitdüse über die Flammenbarriere hinaus insbesondere in den Brennraum (35) erstreckt.

7. Vorrichtung nach Anspruch 6, **dadurch gekennzeichnet, daß** ein Ausgang der wenigstens einen Flammenausbreitdüse aus dem Brenngas austreten kann, in Gravitationsrichtung oberhalb der wenigstens einen Brennerbasisdüse (49) und insbesondere oberhalb der Flammenbarriere mündet, wobei insbesondere mehrere Flammenausbreitdüsen in einem gleichen Abstand zueinander an der Feuerstelle (3) oberhalb der Flammenbarriere angeordnet sind.

8. Vorrichtung nach Anspruch 6 oder 7, **dadurch gekennzeichnet, daß** die wenigstens eine Flammenausbreitdüse als eine in den Brennraum (35) gerichtete Flachstrahldüse (31) ausgebildet ist, wobei insbesondere die Flachstrahldüse (31) eine Strahlrichtung definiert, die bezüglich einer Gravitationsrichtung (g) in einem Winkel von insbesondere etwa 45° geneigt ist.

9. Vorrichtung nach einem der vorstehenden Ansprüche, **dadurch gekennzeichnet, daß** eine Steuer- und/oder Regeleinrichtung vorgesehen ist, die mit den wenigstens einen Ventil zur Regelung der Brandsituation in dem Brennraum (35) verbunden ist.

10. Vorrichtung nach einem der vorstehenden Ansprüche, **dadurch gekennzeichnet, daß** es entsprechend dem nach einem der Ansprüche 22 bis 27 definierten Verfahren arbeitet.

11. Verfahren zum Simulieren einer bestimmten Brandsituation mit schlagartiger Flammenausbreitung, insbesondere eines Flash-over-Brands, in einem verschließbaren oder geschlossenen Brennraum, bei dem während einer Entstehungsphase, insbesondere eines Pre-Flash-Over-Brands, der Brennraum (35) durch eine Feuerstelle (3) auf eine Raumtemperatur von etwa 350°C bis 550°C, vorzugsweise 400°C bis 500°C, vorgewärmt wird und dem Brennraum (35) Rauchgas (61) zugeführt wird, wobei nach Erreichen einer vorbestimmbaren Schwellentemperatur, insbesondere Flash-Over-Temperatur, eine Ausbreitung einer Flamme zumindest in einem Teil des Brennraums (35) veranlaßt wird, um die bestimmte Brandsituation zu simulieren, **dadurch gekennzeichnet, daß** während der Entstehungsphase die Flammenausbreitung durch eine der Feuerstelle (3) zugeordnete Flammenbarriere unterbunden wird.

12. Verfahren nach Anspruch 11, **dadurch gekennzeichnet, daß** die Flammenbarriere in Gravitationsrichtung oberhalb der Feuerstelle (3) angeordnet wird.

13. Verfahren nach einem der Ansprüche 11 oder 12, **dadurch gekennzeichnet, daß** die Flammenbarriere durch die Feuerstelle (3) zum Glühen gebracht wird.

14. Verfahren nach einem der Ansprüche 11 bis 13, **dadurch gekennzeichnet, daß** die Flammenbarriere als Wärmespeicher dient, der während der Entstehungsphase eine Strahlungswärme von etwa 5 bis 20 kW/m² abgibt, wobei insbesondere die Entstehungsphase 2 bis 15 min dauert.

15. Verfahren nach einem der Ansprüche 11 bis 14, **dadurch gekennzeichnet, daß** die schlagartige Flammenausbreitung mindestens 1 Minute, vorzugsweise bis zu 5 Minuten oder 15 Minuten, aufrechtgehalten wird.

16. Verfahren nach einem der Ansprüche 11 bis 15, **dadurch gekennzeichnet, daß** die Schwellentemperatur anhand von Erfahrungswerte eingestellt wird.

17. Verfahren nach einem der Ansprüche 11 bis 16, **dadurch gekennzeichnet, daß** es gemäß der nach einem der Ansprüche 1 bis 10 ausgebildeten Vorrichtung verfährt.
